## Europäisches Patentamt

## European Patent Office

## Office européen des brevets

(19)

(11) Numéro de publication : **0 290 360 B1**

(12)

# FASCICULE DE BREVET EUROPEEN

(45) Date de publication du fascicule du brevet :
**14.08.91 Bulletin 91/33**

(51) Int. Cl.⁵ : **B01D 35/06, B03C 1/32, C22B 9/02, B22D 43/00, C22B 21/06**

(21) Numéro de dépôt : **88420148.4**

(22) Date de dépôt : **05.05.88**

(54) **Procédé de séparation par filtration des inclusions contenues dans un bain métallique liquide.**

(30) Priorité : **07.05.87 FR 8706879**

(43) Date de publication de la demande :
**09.11.88 Bulletin 88/45**

(45) Mention de la délivrance du brevet :
**14.08.91 Bulletin 91/33**

(84) Etats contractants désignés :
**BE DE ES GB GR NL**

(56) Documents cités :
**FR-A- 1 227 022
US-A- 2 125 846
US-A- 4 087 358
METALLURGICAL TRANSACTIONS B, PROCESS METALLURGY, vol. 16B, no. 1-4, mars-décembre 1985, pages 725-742, Warrendale, P.A., US; S. ALI et al.: "Physical refining of steel melts by filtration"**

(73) Titulaire : **ALUMINIUM PECHINEY
Immeuble Balzac 10, place des Vosges La Défense 5
F-92400 Courbevoie (FR)**

(72) Inventeur : **Conti, Calogero
75, rue F. Lalieux
B-7170 Bois d'Hayne (BE)**
Inventeur : **Meyer, Jean-Luc
Résidence La Rivoire Bd du Guillon
F-38500 Voiron (FR)**
Inventeur : **Riquet, Jean-Pierre
F-38260 St Hilaire de la Côte (FR)**
Inventeur : **Netter, Pierre
75, rue Stendhal
F-30130 Pont St Esprit (FR)**

(74) Mandataire : **Vanlaer, Marcel (FR) et al
Péchiney Ugine Kuhlmann Service des Brevets 28, rue de Bonnel
F-69433 Lyon Cédex 3 (FR)**

## Description

L'invention est relative à un procédé de séparation par filtration des inclusions contenues dans un bain métallique liquide.

L'homme de l'art de la fonderie sait que lors de leur élaboration les métaux purs ou alliages sont plus ou moins pollués par des inclusions solides provenant :
— des charges introduites dans les fours de fusion
— des produits de la réaction du bain métallique liquide avec l'atmosphère environnante
— de l'abrasion ou de la dislocation locale des garnissages en matériaux réfractaires des fours
— des sels et flux utilisés pour l'épuration ou l'affinage du métal.

Ces inclusions se présentent sous la forme de particules isolées ou d'agrégats macroscopiques ayant des dimensions variant de quelques microns à plusieurs millimètres.

Si on laisse ces inclusions dans le bain métallique liquide, elles peuvent provoquer l'apparition de porosités ou même de fentes au cours de la solidification du métal et conduire par la suite à la formation de soufflures ou de décollements au cours des traitements thermiques des produits coulés et de trous ou de casses lors de la transformation en produits semi-ouvrés.

Il s'avère donc indispensable d'éliminer ces inclusions du bain de métal liquide avant de passer aux étapes suivantes de mise en forme.

De nombreux procédés ont été préconisés pour assurer cette séparation. Ils sont basés sur différentes techniques plus ou moins bien adaptées aux dimensions des inclusions.

Ce sont notamment :
— la décantation en statique
— la décantation en dynamique au moyen de répartiteurs de liquides destinés à réduire la vitesse de circulation du courant de métal.
— la flottation dans laquelle on utilise des rideaux de bulles de gaz à travers lesquels passe le métal pour abandonner ses inclusions.
— la filtration "profonde" dans laquelle le métal liquide passe à travers un milieu filtrant, c'est-à-dire un milieu présentant des vides qui sont reliés entre eux, vides qui, bien qu'ayant une section plus grande que les dimensions des inclusions, retiennent néanmoins les dites inclusions par piégeage sur les parois qui les délimitent. L'US-A-2863558 décrit un tel procédé de filtration.

La différence de densité entre le métal liquide et les inclusions intervient de façon notable dans ces procédés. Or, parfois, les inclusions, ont une densité voisine de celle du métal. C'est le cas, par exemple, du $MgCl_2$ et de l'aluminium liquide.

Il est alors nécessaire, pour que l'efficacité de la séparation soit convenable, d'opérer soit en statique pendant de longues durées soit en dynamique avec des vitesses d'écoulement du métal très faibles. Cela entraîne des installations surdimensionnées si on veut avoir des capacités de filtration à l'échelle industrielle.

C'est pourquoi d'autres techniques ont été essayées telles que la filtration dite "gâteau" dans laquelle le filtre est muni de trous de dimensions inférieures à celles des inclusions. Certes, dans ce cas, l'efficacité de la filtration est très bonne quelle que soit la vitesse de filtration mais, ces filtres induisent des pertes de charge très importantes incompatibles avec les installations de coulée traditionnelles.

Par ailleurs, on sait qu'on peut séparer des particules solides en suspension dans des liquides en leur appliquant, en l'absence de tout milieu filtrant, des forces électromagnétiques qui ont pour effet de drainer les inclusions. Mais, ces procédés n'ont pas connu d'applications industrielles du fait que les forces à mettre en jeu étaient très grandes et qu'elles nécessitaient des installations électriques de grande taille et très coûteuses.

Face à ces difficultés, la demanderesse a, dans le but d'améliorer la séparation par filtration à la fois sous l'angle quantité par unité de surface et par unité de temps et dimensions des inclusions, mis au point un procédé basé sur la filtration profonde, seule technique largement utilisée actuellement dans l'industrie.

Ce procédé est caractérisé en ce que l'on applique au milieu filtrant à travers lequel passe le bain de métal liquide un champ de forces électromagnétiques.

Comme on l'a vu plus haut, les milieux filtrants ont pour effet de piéger les inclusions sur les parois qui délimitent les vides. D'où l'idée de la demanderesse d'essayer de drainer les inclusions plus efficacement vers les parois. Elle y parvient en appliquant au milieu filtrant un champ de forces électromagnétiques. En effet, elle a constaté que les inclusions ayant pratiquement toujours une résistance électrique beaucoup plus élevée que le métal liquide, le champ avait une action sur le métal seul, et donc par réaction l'inclusion était emmenée dans une direction opposée à la direction du champ. C'est en jouant sur ce comportement différentiel entre le métal et les inclusions que ces dernières arrivent à être interceptées par les parois. De plus, dans les milieux filtrants en l'absence de champ de forces électromagnétiques, le piégeage peut être instable sur certaines parois, notamment quand la quantité d'inclusions dépasse un certain niveau. Dans le cas de la présente invention, il a été constaté que sous l'effet du champ de forces électromagnétiques, les inclusions venaient se plaquer contre la paroi du milieu où elles résistaient beaucoup mieux au phénomène de relargage.

Les forces électromagnétiques appliquées au milieu filtrant et agissant sur le métal sont dirigées globalement soit dans une direction perpendiculaire à la direction de la filtration, soit dans une direction parallèle. On entend ici par direction de la filtration la direction moyenne suivant laquelle le métal s'écoule principalement dans le milieu filtrant.

Ces forces ont une valeur supérieure à $1.10^3$ N/m3 car, en dessous de cette valeur, l'efficacité du champ devient trop faible. De préférence, cette valeur est comprise entre $1.10^3$ et $1.10^6$ N/m3.

Le milieu filtrant correspond dans l'invention à tout milieu constitué soit :

— par une masse poreuse dont les pores ont une section supérieure aux dimensions des inclusions et à travers laquelle le bain métallique liquide passe à une vitesse comprise entre 0,1 et 1,5 cm/sec.

Elle est formée, par exemple, d'un seul bloc ou de plusieurs blocs superposés de mousse céramique.

— par un lit de matériaux non cohérents présentant localement entre eux des interstices dont les dimensions sont supérieures à celles des inclusions et à travers lequel le bain métallique liquide passe à une vitesse comprise entre 0,01 et 0,7 cm/sec.

Ce sont, par exemple, des billes ou des tablettes d'alumine, de silice, de carbone.

— par au moins une bougie filtrante dont la porosité permet d'avoir une vitesse de passage du bain métallique liquide comprise entre 0,01 et 0,06 cm/sec.

Dans certains cas, on utilise un milieu filtrant constitué soit par une masse poreuse ou un lit de matériaux non cohérents mais, présentant en son centre et sur toute l'épaisseur traversée par le métal une zone imperméable.

Ces milieux sont chimiquement inertes ou non vis à vis du métal liquide. Ils sont revêtus ou non de produits tels que des flux par exemple. On les met en oeuvre, de préférence, dans des poches de filtration en présence ou non de courants de gaz ayant soit une action chimique sur le métal ou simplement un effet physique.

Le champ de forces électromagnétiques est dirigé suivant deux directions principales : soit une direction perpendiculaire à la direction de la filtration dans le cas d'une masse poreuse ou d'un lit, soit une direction parallèle à la direction de la filtration dans le cas d'une masse poreuse, d'un lit ou d'une bougie.

Suivant la première direction, ces forces sont créées :

— soit par le passage d'un courant continu dans le métal à travers toute l'épaisseur du milieu filtrant dans la direction de la filtration. Ce courant qui circule soit dans le sens de la filtration ou dans le sens inverse crée son propre champ magnétique et par suite génère un champ de forces dirigé vers le centre du milieu filtrant,

— soit par l'association du même courant continu à un champ magnétique continu de direction perpendiculaire à la direction de filtration ce qui génère un champ de force dirigé perpendiculairement à la fois au champ magnétique et à la direction de filtration dans un sens ou l'autre suivant le sens du courant et du champ.

Le courant continu passe dans le bain de métal liquide par l'intermédiaire d'au moins une paire d'électrodes alimentées par un générateur et placées dans le bain en amont et en aval du milieu filtrant. Quant au champ magnétique continu, il est obtenu au moyen d'au moins un électroaimant ou d'au moins deux aimants permanents formant un ensemble Nord-Sud, tous placés en regard de faces latérales opposées du milieu filtrant.

Dans le cas particulier où le milieu filtrant présente une zone imperméable, le champ de forces est créé :

— soit par le passage d'un courant continu dans la direction de la filtration, courant qui est obtenu comme précédemment au moyen d'un générateur et d'au moins deux électrodes ; la zone imperméable joue ici le rôle d'électrode à travers laquelle passe une partie du courant continu de manière à éviter le "trou" de force au centre du milieu filtrant.

— soit en entourant le milieu filtrant par au moins un tour de spire d'un solénoïde parcouru par un courant de fréquence inférieure ou égale à 60 Hz.

Dans ces deux éventualités, le champ de force est radial et dirigé vers le centre du milieu filtrant, c'est-à-dire perpendiculairement à la direction de filtration.

Suivant une direction parallèle à la direction de la filtration, le champ de forces est créé par l'association d'un champ magnétique continu de direction perpendiculaire à la direction de filtration et d'un courant continu passant dans le métal dans une direction perpendiculaire au champ magnétique et à la direction de la filtration.

Suivant le sens du courant ou du champ magnétique, le champ de forces est dirigé dans le sens de la filtration ou dans le sens opposé.

Dans ce cas, le champ magnétique est obtenu au moyen d'un électro-aimant ou d'au moins une paire d'aimants permanents formant un ensemble Nord-Sud, tous placés en regard de faces latérales opposées du milieu filtrant.

De préférence, le milieu filtrant est alors équipé sur ses faces traversées par le bain de cloisons isolantes

EP 0 290 360 B1

électriquement, parallèles à la direction de filtration et perpendiculaires à la direction du courant de manière à éviter que le bain placé à l'extérieur du milieu filtrant ne court-circuite le courant continu et annihile le champ de forces dans le dit milieu.

Quand le milieu filtrant est une bougie filtrante, le champ de forces est obtenu au moyen d'un solénoïde parcouru par un courant de fréquence inférieure ou égale à 60 Hz, placé à l'intérieur ou à l'extérieur de la dite bougie et dont les spires occupent au moins une fraction de sa hauteur.

L'invention peut être illustrée au moyen de dessins joints à la présente demande et qui représentent :
— figure 1, un milieu filtrant auquel on applique un champ de forces électromagnétiques perpendiculaire à la direction de la filtration créé par un courant continu,
— figure 2, un milieu filtrant auquel on applique un champ de forces électromagnétiques perpendiculaire à la direction de filtration créé par l'association d'un champ magnétique continu et d'un courant continu.
— figure 3, un milieu filtrant présentant une zone imperméable auquel on applique un champ de forces électromagnétiques perpendiculaire à la direction de la filtration créé par un courant continu.
— figure 4, un milieu filtrant présentant une zone imperméable auquel on applique un champ de forces électromagnétiques perpendiculaire à la direction de la filtration créé par un solénoïde parcouru par un courant alternatif.
— figure 5, un milieu filtrant auquel on applique un champ de forces électromagnétiques parallèle à la direction de la filtration créé par l'association d'un champ magnétique continu et d'un courant continu.
— figure 6, une bougie filtrante à laquelle on applique un champ de forces électromagnétiques parallèle à la direction de filtration créé par un solénoïde parcouru par un courant alternatif et qui entoure la bougie. Plus précisément, on distingue :

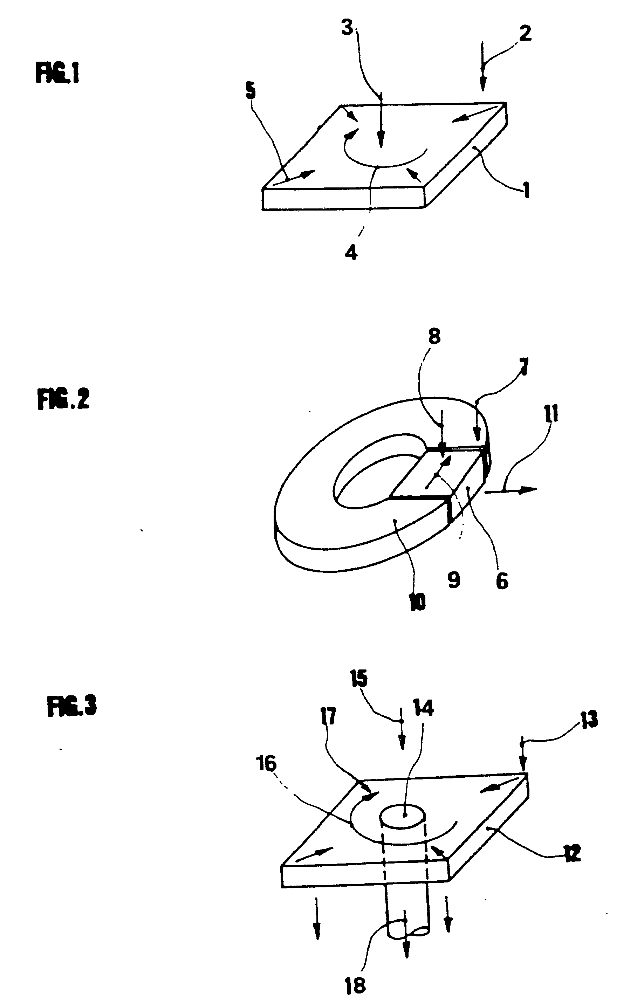

— sur la figure 1, un milieu filtrant 1 occupant toute la section d'une poche de filtration non représentée, à travers lequel passe un bain de métal liquide suivant la direction 2 et auquel est appliqué un courant continu de direction 3 qui génère son propre champ magnétique 4 et créé un champ de forces électromagnétiques de direction 5.
— sur la figure 2, un milieu poreux 6 disposé comme précédemment, traversé par le bain suivant la direction 7 et auquel on applique un courant continu de direction 8 associé à un champ magnétique continu de direction 9 obtenu au moyen de l'électro-aimant 10, cette association créant un champ de forces électromagnétiques de direction 11,
— sur la figure 3, un milieu poreux 12 disposé comme précédemment, traversé par le bain suivant la direction 13, et présentant une zone imperméable 14, auquel on applique un courant continu de direction 15 qui génère son propre champ magnétique de direction 16 et créé un champ de forces électromagnétiques de direction 17. Une partie 18 du courant continu qui passe à travers le milieu passe par la zone 14,

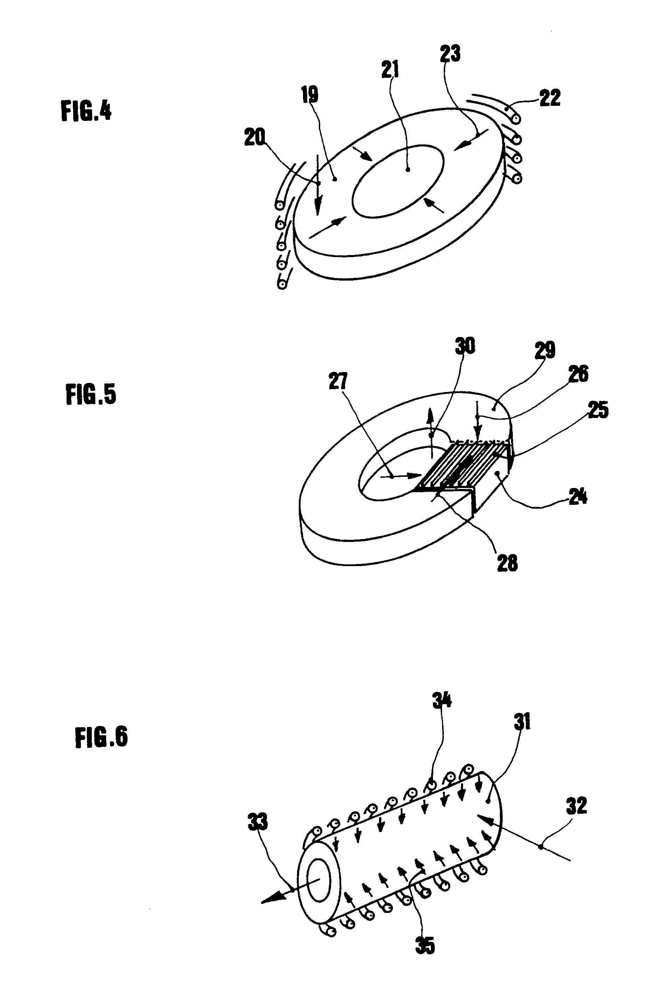

— sur la figure 4, un milieu filtrant 19 disposé comme précédemment, traversé par le bain suivant la direction 20 et présentant une zone inperméable 21, ledit milieu est entouré par plusieurs tours de spire, d'un solénoïde 22 qui créé un champ de forces électromagnétiques 23,
— sur la figure 5, un milieu filtrant 24 disposé comme précédemment, équipé de cloisons 25 traversées par le bain suivant la direction 26 et auquel on applique un courant continu de direction 27 associé à un champ magnétique continu de direction 28 généré par un électro-aimant 29, cette association créant un champ de forces électromagnétiques de direction 30,
— sur la figure 5, une bougie filtrante 31 disposée dans un bain qui circule dans la direction 32 pour sortir suivant la direction 33, ladite bougie est entourée par un solénoïde 34 qui crée un champ de forces électromagnétiques de direction 35.

L'invention sera mieux comprise à l'aide de l'exemple d'application suivant :
un alliage d'aluminium du type 1050 suivant les normes de l'Aluminium Association a été fondu, puis partagé en quatre fractions repérées 1,2,3 et 4. Chacune des fractions a été coulée sous forme de billettes après avoir subi dans une poche un traitement de séparation des inclusions sauf la fraction 1 servant de témoin qui a été coulée directement.

La fraction 2 a été soumise à un traitement de drainage électromagnétique, c'est-à-dire qu'on lui a appliqué un champ de forces de 1,5 10$^4$ N/m3 en l'absence de tout milieu filtrant.

La fraction 3 a été passée avec une vitesse de 0,7 cm/sec à travers un lit d'épaisseur 5 cm constitué par un matériau ayant une porosité ouverte de 65% et une taille moyenne des pores de 1,5 mm.

La fraction 4 a été traitée comme la fraction 3 mais en appliquant au lit suivant l'invention un champ de forces de 1,5 10$^4$ N/m3 dirigées perpendiculairement à la direction de filtration.

Des échantillons prélevés sur chacune des fractions ont été dissous dans du méthanol bromé afin de mesurer les niveaux d'inclusions correspondants à chaque méthode de séparation.

Deux sortes de mesure ont été faites :
— l'une consiste à déterminer le diamètre de la plus grosse inclusion restant dans le résidu de dissolution,

4

— l'autre concerne la nocivité globale de l'ensemble des inclusions ou nocivité inclusionnaire I. Pour l'obtenir, on affecte à chaque inclusion un degré de nocivité (i) lié à son diamètre ⌀ de la manière indiquée dans le tableau suivant :

| Taille de l'inclusion ⌀ ( µm) | Degré de nocivité (i) |
|---|---|
| 0 < ⌀ < 20 | 1 |
| 20 < ⌀ < 40 | 2 |
| 40 < ⌀ < 60 | 4 |
| 60 < ⌀ < 80 | 10 |
| 100 < ⌀ | 20 |

La nocivité inclusionnaire I correspond à la formule :

$$I = \Sigma \, d \, (\varnothing) \times i \, (\varnothing)$$

où d (⌀) est égal au nombre d'inclusions de diamètre (⌀) par unité de volume de métal et i (⌀) le degré de nocivité décrit ci-dessus.

Les résultats obtenus à partir des 4 échantillons sont les suivants :

| N° échantillon | Diamètre de la plus grosse inclusion ( µm) | Nocivité inclusionnaire I |
|---|---|---|
| 1 | 150 | 3000 |
| 2 | 200 | 2500 |
| 3 | 80 | 200 |
| 4 | 10 | 15 |

On constate donc sur l'échantillon 4 résultant d'un métal traité suivant l'invention que, d'une part, il ne contient pas d'inclusions de diamètre supérieur à 10 µm alors que ce diamètre est de 200 µm pour le drainage électromagnétique seul et de 80 µm pour le piégeage dans un milieu filtrant seul, d'autre part, il a une nocivité inclusionnaire de 15 alors que pour le procédé de drainage il est de 2500 et pour le piégeage de 200.

Ces résultats montrent que le procédé selon l'invention permet d'atteindre un niveau d'inclusions très faible dans un bain métallique. De ce fait, les produits métallurgiques obtenus par solidification d'un tel bain présentent une aptitude à la transformation nettement meilleure que ceux de l'art antérieur.

**Revendications**

1. Procédé de séparation des inclusions contenues dans un bain métallique liquide par passage dans un milieu filtrant caractérisé en ce que l'on applique au dit milieu un champ de forces électromagnétiques.

2. Procédé selon la revendication 1 caractérisé en ce que les forces ont une valeur comprise entre $1 \cdot 10^3$ et $1 \cdot 10^6$ N/m3.

3. Procédé selon la revendication 1 caractérisé en ce que le milieu filtrant est une masse poreuse à travers laquelle le bain passe à une vitesse comprise entre 0,1 et 1,5 cm/sec.

4. Procédé selon la revendication 1 caractérisé en ce que le milieu filtrant est un lit épais de matériaux non cohérents à travers laquelle le bain passe à une vitesse comprise entre 0,01 et 0,7 cm/sec.

5. Procédé selon la revendication 1 caractérisé en ce que le milieu filtrant est au moins une bougie filtrante, à travers laquelle le bain passe à une vitesse comprise entre 0,01 et 0,06 cm/sec.

6. Procédé selon les revendications 3 et 4 caractérisé en ce que le milieu filtrant présente en son centre et sur toute l'épaisseur traversée par le métal une zone imperméable.

7. Procédé selon les revendications 3 et 4 caractérisé en ce que l'on dirige principalement les forces dans une direction perpendiculaire à la direction de la filtration.

8. Procédé selon les revendications 3,4 et 5 caractérisé en ce que l'on dirige principalement les forces dans une direction parallèle à la direction de la filtration.

9. Procédé selon la revendication 7 caractérisé en ce que le champ de forces est créé par le passage d'un courant continu dans le métal à travers toute l'épaisseur du milieu filtrant et dans la direction de la filtration.

10. Procédé selon la revendication 7 caractérisé en ce que le champ de forces est créé par l'association d'un champ magnétique continu de direction perpendiculaire à la direction de filtration et d'un courant continu passant dans le métal dans la direction de la filtration.

11. Procédé selon les revendications 9 et 10 caractérisé en ce que le courant continu passe dans le bain de métal liquide par l'intermédiaire d'au moins une paire d'électrodes alimentées par un générateur et placées dans le bain en amont et en aval du milieu filtrant.

12. Procédé selon la revendication 10 caractérisé en ce que le champ magnétique continu est obtenu au moyen d'au moins un électro-aimant placé en regard de faces latérales opposées du milieu filtrant.

13. Procédé selon la revendication 10 caractérisé en ce que le champ magnétique continu est obtenu au moyen d'au moins deux aimants permanents formant un ensemble Nord-Sud placé en regard de faces latérales opposées de milieu filtrant.

14. Procédé selon la revendication 6 caractérisé en ce que le champ de forces est créé par le passage d'un courant continu dans la direction de la filtration.

15. Procédé selon la revendication 6 caractérisé en ce que la zone imperméable forme une électrode au travers de laquelle passe une partie du courant.

16. Procédé selon la revendication 6 caractérisé en ce que l'on entoure le milieu filtrant par au moins un tour de spire d'un solénoïde parcouru par un courant de fréquence inférieure ou égale à 60 Hz.

17. Procédé selon la revendication 8 caractérisé en ce que le champ de forces est créé par l'association d'un champ magnétique continu de direction perpendiculaire à la direction de filtration et d'un courant continu passant dans le métal dans une direction perpendiculaire au champ magnétique et à la direction de la filtration.

18. Procédé selon la revendication 17 caractérisé en ce que le champ magnétique est créé par un électro-aimant agissant sur des faces latérales opposées du milieu filtrant.

19. Procédé selon la revendication 17 caractérisé en ce que le champ magnétique est créé par au moins une paire d'aimants permanents formant un ensemble Nord-Sud placés en regard de faces latérales opposées au milieu filtrant.

20. Procédé selon la revendication 17 caractérisé en ce que l'on utilise un milieu filtrant équipé sur ses faces traversées par le bain de cloisons isolantes électriquement parallèles à la direction de filtration et perpendiculaire à la direction du courant.

21. Procédé selon la revendication 5 caractérisé en ce que l'on entoure chaque bougie d'un solénoïde parcouru par un courant de fréquence inférieure ou égale à 60 Hz et dont les spires occupent une fraction au moins de la hauteur de ladite bougie.

22. Procédé selon la revendication 5 caractérisé en ce que l'on place à l'intérieur de chaque bougie un solénoïde parcouru par un courant de fréquence inférieure ou égale à 60 Hz et dont les spires occupent une fraction au moins de la hauteur de ladite bougie.


## Patentansprüche

1. Verfahren zur Abtrennung der in einer Metallschmelze enthaltenen Einschlüsse mittels Durchgangs durch ein Filtriermedium, dadurch **gekennzeichnet**, daß man an das Medium ein Feld elektromagnetischer Kräfte anlegt.

2. Verfahren nach dem Anspruch 1, dadurch gekennzeichnet, daß die Kräfte einen Wert von $1 \cdot 10^3$ bis $1 \cdot 10^6$ N/m³ haben.

3. Verfahren nach dem Anspruch 1, dadurch gekennzeichnet, daß das Filtriermedium eine poröse Masse ist, durch die die Schmelze mit einer Geschwindigkeit von 0,1 bis 1,5 cm/s durchgeht.

4. Verfahren nach dem Anspruch 1, dadurch gekennzeichnet, daß das Filtriermedium ein dickes Bett von nicht zusammenhängenden Materialien ist, durch das die Schmelze mit einer Geschwindigkeit von 0,01 bis 0,7 cm/s durchgeht.

5. Verfahren nach dem Anspruch 1, dadurch gekennzeichnet, daß das Filtriermedium wenigstens eine Filtrierkerze ist, durch die die Schmelze mit einer Geschwindigkeit von 0,01 bis 0,06 cm/s durchgeht.

6. Verfahren nach den Ansprüchen 3 und 4, dadurch gekennzeichnet, daß das Filtriermedium in seiner Mitte und über die ganze von Metall durchsetzte Dicke eine undurchlässige Zone aufweist.

7. Verfahren nach den Ansprüchen 3 und 4, dadurch gekennzeichnet, daß man die Kräfte hauptsächlich in eine zur Filtrierrichtung senkrechte Richtung lenkt.

8. Verfahren nach den Ansprüchen 3, 4 und 5, dadurch gekennzeichnet, daß man die Kräfte hauptsächlich in eine zur Filtrierrichtung parallele Richtung lenkt.

9. Verfahren nach dem Anspruch 7, dadurch gekennzeichnet, daß das Kräftefeld durch den Fluß eines Gleichstroms im Metall durch die ganze Dicke des Filtriermediums und in der Filtrierrichtung erzeugt wird.

10. Verfahren nach dem Anspruch 7, dadurch gekennzeichnet, daß das Kräftefeld durch die Verbindung eines Gleichmagnetfeldes einer zur Filtrierrichtung senkrechten Richtung und eines im Metall in der Filtrierrichtung fliessenden Gleichstroms erzeugt wird.

11. Verfahren nach den Ansprüchen 9 und 10, dadurch gekennzeichnet, daß der Gleichstrom in der Metallschmelze mittels wenigstens eines Paares von Elektroden fließt, die von einem Generator gespeist werden und in der Schmelze stromauf und stromab des Filtriermediums angeordnet sind.

12. Verfahren nach dem Anspruch 10, dadurch gekennzeichnet, daß das Gleichmagnetfeld mittels wenigstens eines Elektromagnets erhalten wird, der gegenüber entgegengesetzten Seitenflächen des Filtriermediums angeordnet ist.

13. Verfahren nach dem Anspruch 10, dadurch gekennzeichnet, daß das Gleichmagnetfeld mittels wenigstens zweier Dauermagnete erhalten wird, die eine gegenüber entgegengesetzten Seitenflächen des Filtriermediums angeordnete Nord-Süd-Gruppe bilden.

14. Verfahren nach dem Anspruch 6, dadurch gekennzeichnet, daß das Kräftefeld durch den Fluß eines Gleichstroms in der Filtrierrichtung erzeugt wird.

15. Verfahren nach dem Anspruch 6, dadurch gekennzeichnet, daß die undurchlässige Zone eine Elektrode bildet, durch die ein Teil des Stroms fließt.

16. Verfahren nach dem Anspruch 6, dadurch gekennzeichnet, daß man das Filtriermedium mit wenigstens einem Windungsumfang eines von einem Strom einer Frequenz unter oder gleich 60 Hz durchflossenen Solenoids umgibt.

17. Verfahren nach dem Anspruch 8, dadurch gekennzeichnet, daß das Kräftefeld durch die Verbindung eines Gleichmagnetfeldes einer zur Filtrierrichtung senkrechten Richtung und eines im Metall in einer zum Magnetfeld und zur Filtrierrichtung senkrechten Richtung fliessenden Gleichstroms erzeugt wird.

18. Verfahren nach dem Anspruch 17, dadurch gekennzeichnet, daß das Magnetfeld durch einen Elektromagnet erzeugt wird, der auf die entgegengesetzten Seitenflächen des Filtriermediums wirkt.

19. Verfahren nach dem Anspruch 17, dadurch gekennzeichnet, daß das Magnetfeld durch wenigstens ein Paar von Dauermagneten erzeugt wird, die eine Nord-Süd-Gruppe bilden und gegenüber entgegengesetzten Seitenflächen des Filtriermediums angeordnet sind.

20. Verfahren nach dem Anspruch 17, dadurch gekennzeichnet, daß man ein Filtriermedium verwendet, das auf seinen von der Schmelze durchsetzten Flächen mit zur Filtrierrichtung parallelen und zur Richtung des Stroms senkrechten, elektrisch isolierenden Trennwänden ausgerüstet ist.

21. Verfahren nach dem Anspruch 5, dadurch gekennzeichnet, daß man jede Kerze mit einem Solenoid umgibt, das von einem Strom einer Frequenz unter oder gleich 60 Hz durchflossen wird und dessen Windungen einen Anteil von wenigstens der Höhe der Kerze einnehmen.

22. Verfahren nach dem Anspruch 5, dadurch gekennzeichnet, daß man im Inneren jeder Kerze ein Solenoid anordnet, das von einem Strom einer Frequenz unter oder gleich 60 Hz durchflossen wird und dessen Windungen einem Anteil von wenigstens der Höhe der Kerze einnehmen.

## Claims

1. A process for the separation of inclusions contained in a liquid metal bath by passing it through a filtering medium characterised in that a field of electromagnetic forces is applied to said medium.

2. A process according to claim 1 characterised in that the forces are of a value of between $1 \cdot 10^3$ and $1 \cdot 10^6$ N/m3.

3. A process according to claim 1 characterised in that the filtering medium is a porous mass through which the bath passes at a rate of between 0.1 and 1.5 cm/sec.

4. A process according to claim 1 characterised in that the filtering medium is a thick bed of non-coherent materials through which the bath passes at a rate of between 0.01 and 0.7 cm/sec.

5. A process according to claim 1 characterised in that the filtering medium is at least one filter candle through which the bath passes at a rate of between 0.01 and 0.06 cm/sec.

6. A process according to claims 3 and 4 characterised in that the filtering medium has an impermeable zone at its centre and over the entire thickness through which the metal passes.

7. A process according to claims 3 and 4 characterised in that the forces are directed mainly in a direction perpendicular to the direction of filtration.

8. A process according to claims 3, 4 and 5 characterised in that the forces are directed mainly in a direction parallel to the filtration direction.

9. A process according to claim 7 characterised in that the force field is created by passing a direct current in the metal through the entire thickness of the filtering medium and in the filtration direction.

10. A process according to claim 7 characterised in that the force field is created by the associated of a constant magnetic field in a direction perpendicular to the filtration direction and a direct current passing through the metal in the filtration direction.

11. A process according to claims 9 and 10 characterised in that the direct current passes through the liquid metal bath by way of at least one pair of electrodes which are supplied by a generator and which are disposed in the bath upstream and downstream of the filtering medium.

12. A process according to claim 10 characterised in that the constant magnetic field is obtained by means of at least one electromagnet disposed facing opposite side faces of the filtering medium.

13. A process according to claim 10 characterised in that the constant magnetic field is produced by means of at least two permanent magnets forming a North-South assembly which is disposed facing opposite side faces of the filtering medium.

14. A process according to claim 6 characterised in that the force field is created by the flow of a direct current in the filtration direction.

15. A process according to claim 6 characterised in that the impermeable zone forms an electrode through which a part of the current passes.

16. A process according to claim 6 characterised in that the filtering medium is surrounded by at least one coil turn of a solenoid through which passes a current at a frequency less than or equal to 60 Hz.

17. A process according to claim 8 characterised in that the force field is created by the association of a constant magnetic field in a direction perpendicular to the filtration direction and a direct current passing through the metal in a direction perpendicular to the magnetic field and to the filtration direction.

18. A process according to claim 17 characterised in that the magnetic field is created by an electromagnet acting on opposite side faces of the filtering medium.

19. A process according to claim 17 characterised in that the magnetic field is created by at least one pair of permanent magnets forming a North-South assembly disposed facing opposite side faces of the filtering medium.

20. A process according to claim 17 characterised by using a filtering medium which is provided on its faces through itch the bath passes with electrically insulating partitions which are parallel to the filtration direction and perpendicular to the direction of the current.

21. A process according to claim 5 characterised by surrounding each candle by a solenoid through which passes a current at a frequency of less than or equal to 60 Hz and the turns of which occupy a fraction at least of the height of said candle.

22. A process according to claim 5 characterised in that disposed in the interior of each candle is a solenoid through which passes a current at a frequency of less than or equal to 60 Hz and the turns of which occupy a fraction at least of the height of said candle.

FIG.1

FIG.2

FIG.3

FIG.4

FIG.5

FIG.6